# EUROPEAN PATENT APPLICATION

(11) **EP 4 841 332 A1**
(43) Date of publication of application: **18.11.2026**
(21) Application number: 24925723.9
(22) Date of filing: 20.12.2024
(51) Int. Cl.: G02C 7/10, G02B 1/115, G02B 1/18

(54) **SPECTACLE LENS AND SPECTACLES**

(30) Priority: 22.02.2024 JP 2024025839
(71) Applicant: Tokai Optical Holdings Co., Ltd., Okazaki-shi, Aichi 444-2192 (JP)
(72) Inventor: SUZUKI, Ryosuke, Okazaki-shi, Aichi 444-2192 (JP); TAKAHASHI, Hirotoshi, Okazaki-shi, Aichi 444-2192 (JP)
(74) Representative: Prüfer & Partner mbB Patentanwälte · Rechtsanwälte
(86) International application number: PCT/JP2024/045306
(87) International publication number: WO 2025/177689

(57) **Abstract**

To provide a spectacle lens and spectacles that can achieve better visibility while suppressing transmission of blue light to reduce the burden on the eyes. A spectacle lens includes a base material and a multilayer film disposed indirectly on a film disposition surface of the base material. The multilayer film includes one or more low refractive index layers, one or more high refractive index layers, and an absorption layer. The absorption layer contains SnO_{z} (0 < z ≤ 2). The absorption layer is disposed on a side closer to the base material relative to the high refractive index layer closest to the air side.

## Description

### FIELD OF THE INVENTION

The present invention relates to a spectacle lens and spectacles that reduce (i.e., cut) the transmission of blue-colored light, i.e., blue light, which is visible as blue and has a wavelength range on the short wavelength side in the visible region.

### BACKGROUND OF THE INVENTION

As a spectacle lens that reduces the burden on the eyes caused by blue light through absorption rather than reflection of blue light, the product described in JP 6873880 B has been known. This spectacle lens includes a multilayer film including a chromium (Cr) layer having a film thickness of 1.0 to 10.0 nm.

In addition, as an antistatic article, the product described in JP 1992-063117 A has been known. This antistatic article includes an antireflection coating with two or more layers, having at least one layer composed mainly of tin dioxide (SnO₂).

The Cr layer absorbs not only blue light but also light in other wavelength ranges in the visible region, such as green light and red light. Therefore, in the spectacle lens having a Cr layer, the luminous transmittance decreases, resulting in reduced visibility.

A layer composed mainly of SnO₂ is known as a translucent conductive film provided for antistatic purposes. As described in the examples of JP 1992-063117 A, the physical film thickness of the layer composed mainly of SnO₂ is made thick, exceeding 65 nm, in order to achieve an antistatic effect. In addition, in a multilayer film, in order to achieve the antistatic effect, the layer composed mainly of SnO₂ is disposed on the outermost layer, which is the layer closest to the surface side, or on the next outermost layer, which is the layer adjacent to the back surface side of the outermost layer. The surface side is also referred to as the air side or the objective side. Furthermore, the back surface side is also referred to as the base material side or the eyeball side.

A main object of the present invention is to provide a spectacle lens that can achieve better visibility while suppressing transmission of blue light to reduce the burden on the eyes, and spectacles including the spectacle lens.

### SUMMARY OF THE INVENTION

The present specification discloses a spectacle lens. The spectacle lens includes a base material. The spectacle lens includes a multilayer film disposed directly or indirectly on a film disposition surface of the base material. The multilayer film may include one or more low refractive index layers. The multilayer film includes one or more high refractive index layers. The multilayer film includes an absorption layer. The absorption layer contains SnO_{z} (0 < z ≤ 2). The absorption layer is disposed on a side closer to the base material relative to the high refractive index layer closest to an air side.

In addition, the present specification discloses a spectacle lens. The spectacle lens includes a base material. The spectacle lens includes a multilayer film disposed directly or indirectly on a film disposition surface of the base material. The multilayer film includes one or more low refractive index layers. The multilayer film includes one or more high refractive index layers. The multilayer film includes an absorption layer. The absorption layer contains SnO_{z} (0 < z ≤ 2). The absorption layer is not disposed on an outermost layer, which is a layer closest to the air side, in the multilayer film. The absorption layer is not disposed on a next outermost layer, which is a layer adjacent to the outermost layer on the base material side.

Furthermore, the present specification discloses a spectacle lens. The spectacle lens includes a base material. The spectacle lens includes a multilayer film disposed directly or indirectly on a film disposition surface of the base material. The multilayer film includes one or more low refractive index layers. The multilayer film includes one or more high refractive index layers. The multilayer film includes an absorption layer. The absorption layer contains SnO_{z} (0 < z ≤ 2). The absorption layer is disposed on a side closer to the base material relative to the low refractive index layer closest to the air side. The absorption layer is disposed on a side closer to the base material relative to the high refractive index layer closest to an air side.

Still furthermore, the present specification discloses spectacles. The spectacles includes the spectacle lenses.

A main effect of the present invention is to provide a spectacle lens that can achieve better visibility while suppressing transmission of blue light to reduce the burden on the eyes, and spectacles including the spectacle lens.

### BRIEF DESCRIPTION OF THE DRAWINGS

FIG. 1 is a schematic cross-sectional view of a spectacle lens according to the present invention.
FIG. 2 is a schematic cross-sectional view of the spectacle lens indicating that the color of reflected light can differ between the air side and the base material side.
FIG. 3 shows a graph representing spectral reflectance distributions by simulation on the air side and the eyeball side for film structures 1 and A.
FIG. 4 shows a graph representing spectral reflectance distributions by simulation on the air side and the eyeball side for film structures 2 and B.
FIG. 5 shows a graph representing spectral reflectance distributions by simulation on the air side and the eyeball side for film structures 3 and C.
FIG. 6 shows a graph representing spectral reflectance distributions by measurement on the air side and the eyeball side for Example 1 and Comparative Example 1.
FIG. 7 shows a graph representing spectral reflectance distributions by measurement on the air side and the eyeball side for Examples 2 and 3.
FIG. 8 shows a graph representing spectral reflectance distributions by measurement on the air side and the eyeball side for Comparative Example 2.
FIG. 9 shows a graph representing spectral reflectance distributions by measurement on the air side and the eyeball side for Comparative Examples 3 and 4.
FIG. 10 shows a graph representing spectral transmittance distributions by measurement for Examples 4 to 6.
FIG. 11 shows a graph representing spectral transmittance distributions by measurement for Comparative Examples 5 and 6.
FIG. 12 shows a graph representing spectral transmittance distributions by measurement for Example 7 and Comparative Example 7.

### DETAILED DESCRIPTION OF THE INVENTION

An exemplary embodiment of the present invention will be described below with appropriate reference to the drawings.

However, the embodiment is not limited to the following exemplary embodiment.

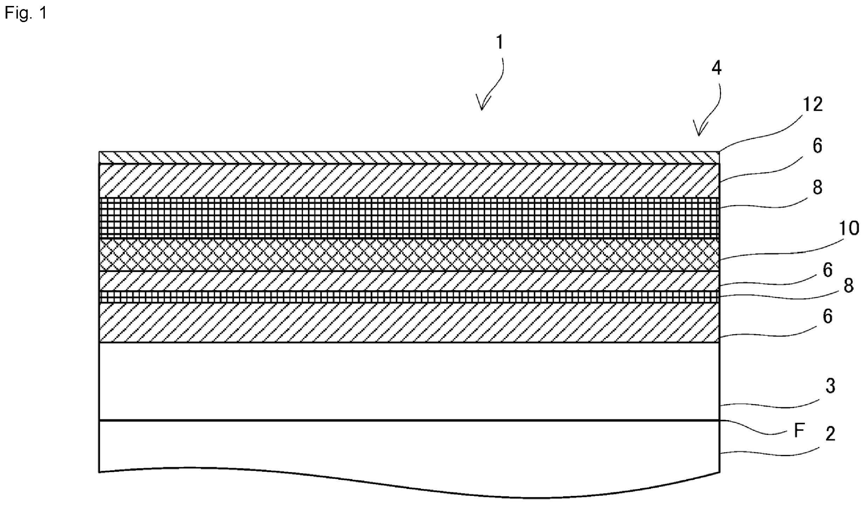

FIG. 1 is a schematic cross-sectional view of a spectacle lens 1 according to the present invention.

The spectacle lens 1 according to the present invention has a base material 2, an interposed film 3, and a multilayer film 4.

The base material 2 is translucent. The base material 2 is preferably a plastic lens base material made of plastic. The base material 2 may be formed from a material other than plastic, such as glass. In addition, the base material 2 may be formed from multiple materials, such as glass and plastic.

As the material of the base material 2, a thermosetting resin is preferably used. For example, polyurethane resin, thiourethane resin, urethane-urea resin, episulfide resin, polycarbonate resin, polyester resin, acrylic resin, polyether sulfone resin, poly(4-methylpentene-1) resin, diethylene glycol bis(allyl carbonate) resin, or any combination selected therefrom is used.

The base material 2 is preferably in a plate-like shape. The plate-like base material 2 is also referred to as a substrate. The base material 2 is a spectacle-lens base material. The spectacle-lens base material may or may not have a power. The spectacle-lens base material may be convex toward the object side, flat, or convex toward the eyeball side.

The multilayer film 4 is provided on one or more surfaces of the base material 2. The multilayer film 4 is an optical multilayer film. The multilayer film 4 has antireflection performance and blue light cutting performance. The surface of the base material 2 on the inner side of the multilayer film 4 is a film disposition surface F. When a plurality of multilayer films 4 are provided, the opposing surfaces of the plate-like base material 2 preferably serve as film disposition surfaces F. Hereinafter, for ease of description, the case where one multilayer film 4 is provided on one film disposition surface F is mainly described. The multilayer film 4 may be provided on the film disposition surface F of the plate-like base material 2, and another type of film may be provided on the surface opposite to the film disposition surface F. The other type of film may be, for example, a dielectric multilayer film having antireflection properties, or a coating film that suppresses at least one of a scratch and a crack.

The multilayer film 4 is provided indirectly on the film disposition surface F via the interposed film 3. The interposed film 3 is a hard coating film. The multilayer film 4 may be formed directly on the film disposition surface F, or may be formed via another type of the interposed film 3 instead of, or together with, the hard coating film. When a plurality of multilayer films 4 are provided, the types of added interposed films 3 may vary from each other, or the presence and absence of the interposed films 3 may vary from each other on the film disposition surfaces F of the base material 2. The multilayer film 4 is disposed above the film disposition surface F, that is, on the air side, regardless of whether the multilayer film 4 is provided directly or indirectly with respect to the film disposition surface F.

The hard coating film is suitably formed by uniformly applying a hard coating solution to the surface of the base material 2.

As a material of the hard coating film, organosiloxane-based resin containing inorganic oxide particles may be preferably used. In this case, the hard coating solution is preferably prepared by mixing a solute containing organosiloxane-based resin and inorganic oxide particle sol as main components, in water or an alcohol-based solvent. The organosiloxane-based resin obtained by hydrolyzing and condensing an alkoxysilane is preferably used. Specific examples of the organosiloxane-based resin include γ-glycidoxypropyltrimethoxysilane, γ-glycidoxypropyltriethoxysilane, methyl trimethoxysilane, ethyl silicate, and a combination thereof. The hydrolysis condensates of these alkoxysilanes are produced by hydrolyzing the alkoxysilane compounds or any combination selected therefrom, with an acidic aqueous solution such as hydrochloric acid.

Meanwhile, specific examples of a material of the inorganic oxide particles include a sol of each of zinc oxide, silicon dioxide (silica), aluminum oxide, titanium oxide (titania), zirconium oxide (zirconia), tin oxide, beryllium oxide, antimony oxide, tungsten oxide, and cerium oxide, and mixed crystals of two or more of the sols. The diameter of the inorganic oxide particle is preferably 1 nm or more and 100 nm or less, and more preferably 1 nm or more and 50 nm or less from the viewpoint of ensuring transparency of the hard coating film. The amount (concentration) of the inorganic oxide particles to be blended is preferably 40 wt% or more and 60 wt% or less of all the components of the hard coating film, from the viewpoint of ensuring an appropriate level of at least one of hardness and toughness of the hard coating film. In addition, to the hard coating solution, a curing catalyst such as acetylacetone metal salt and ethylenediaminetetraacetic acid metal salt may be added. Furthermore, to the hard coating solution, for example, a surfactant, a colorant, or a solvent may be added as necessary for ensuring adhesion to the base material 2, facilitating formation, or the like.

The physical film thickness of the hard coating film is preferably 0.5 µm or more and 4.0 µm or less, and more preferably 1.0 µm or more and 3.0 µm or less. The lower limit of the film thickness range is determined since it is difficult to obtain a sufficient hardness if the film thickness is less than the lower limit. Meanwhile, the upper limit is determined since the possibility of causing a problem with physical properties such as generation of cracks or fragility is significantly increased if the film thickness is greater than the upper limit.

Furthermore, as the interposed film 3, a primer film may be added between the hard coating film and the surface of the base material 2, from the viewpoint of improving adhesion of the hard coating film. Examples of a material of the primer film include polyurethane-based resin, acrylic resin, methacrylic resin, organosilicon-based resin, or any combination selected therefrom. The primer film is suitably formed by uniformly applying a primer solution to the surface of the base material 2. The primer solution is preferably a solution obtained by mixing the resin material and inorganic oxide particles in water or an alcohol-based solvent.

The multilayer film 4 includes one or more low refractive index layers 6, one or more high refractive index layers 8, an absorption layer 10, and an antifouling layer 12. The antifouling layer 12 may be omitted. Alternatively, the antifouling layer 12 may be treated as an independent thin film rather than a constituent element of the multilayer film 4.

From the viewpoint of obtaining good antireflection properties, it is preferable that a plurality of low refractive index layers 6 and a plurality of high refractive index layers 8 are disposed, and these layers are alternately disposed. The total number of the low refractive index layers 6 and the high refractive index layers 8 is preferably five or more, and the total number thereof is four or more when the absorption layer 10 functions as the low refractive index layer 6 or the high refractive index layer 8. The total number of the low refractive index layers 6 and the high refractive index layers 8 is more preferably seven or more, and the total number thereof is six or more when the absorption layer 10 functions as the low refractive index layer 6 or the high refractive index layer 8.

In FIG. 1, a first layer which is a layer closest to the base material 2 in the multilayer film 4 is the low refractive index layer 6. In addition, in FIG. 1, an adjacent layer adjacent to the absorption layer 10 on the base material 2 side in the multilayer film 4 is the low refractive index layer 6. Furthermore, in FIG. 1, an adjacent layer adjacent to the absorption layer 10 on the air side in the multilayer film 4 is the high refractive index layer 8. The total number of the low refractive index layers 6 and the high refractive index layers 8 in the multilayer film 4 in FIG. 1 is five, which is an odd number.

The configuration of the multilayer film 4 is not limited to the multilayer film 4 in FIG. 1. For example, the first layer of the multilayer film 4 may be the high refractive index layer 8. In addition, the adjacent layer to the absorption layer 10 on the base material 2 side may be the high refractive index layer 8. Furthermore, the adjacent layer to the absorption layer 10 on the air side may be the low refractive index layer 6. The total number of the low refractive index layers 6 and the high refractive index layers 8 may be four or less, or six or more.

The low refractive index layer 6 is preferably formed through deposition of a low refractive index deposition material. The low refractive index layer 6 is made of a low refractive index material. The low refractive index layer 6 is preferably made of a dielectric material. Examples of the low refractive index material include silicon oxide including SiO₂ and magnesium fluoride including MgF₂. The low refractive index material may be a mixture or a composite of two or more types of materials, such as a mixture of SiO₂ and Al₂O₃.

The high refractive index layer 8 is preferably formed through deposition of a high refractive index deposition material. The high refractive index layer 8 is made of a high refractive index material. The high refractive index layer 8 is preferably made of a dielectric material. Examples of the high refractive index material include zirconium oxide including ZrO₂, titanium oxide including TiO₂, tantalum oxide including Ta₂O₅, and niobium oxide including Nb₂O₅.

The refractive index of the high refractive index layer 8 is, for example, 1.8 or more. The high refractive index material may be a mixture or a composite of two or more types of materials.

The deposition is preferably vacuum deposition. The deposition may be performed, for example, by ion-assisting with at least one of oxygen ions and argon ions, or performed while plasma treatment is performed. At least one of the low refractive index layer 6 and the high refractive index layer 8 may be formed by a method other than deposition, such as sputtering.

The absorption layer 10 is a layer containing SnO₂, which is fully oxidized Sn, i.e., a SnO₂ layer, or a layer containing tin oxide that is not fully oxidized due to oxygen deficiency. The absorption layer 10 absorbs blue light in the visible region. The absorption layer 10 is preferably formed through deposition using Sn or SnO₂ as a deposition source. The deposition is preferably vacuum deposition. The deposition may be performed, for example, by ion-assisting with at least one of oxygen ions and argon ions, or performed while plasma treatment is performed. The absorption layer 10 may be formed by a method other than deposition, such as sputtering.

The degree of oxidation of the absorption layer 10 can vary depending on film formation conditions, such as deposition conditions. From such a viewpoint, the absorption layer 10 can be represented as a SnO_{z} layer containing SnO_{z} (0 < z ≤ 2). In many cases, z often takes a large value of about 1.8 or more. In the SnO_{z} (0 < z < 2) layer, oxygen deficiency occurs. In the SnO_{z} (z = 2) layer, no oxygen deficiency occurs. Hereinafter, unless otherwise specified, the z in SnO_{z} and the SnO_{z} layer satisfies 0 < z ≤ 2.

Strictly speaking, determining z in the absorption layer 10 requires observing numerous atoms with equipment such as an electron microscope and counting the atoms by type, which involves significant cost, and thus is not practical. The actual microscopic physical structure of the multilayer film 4 including the absorption layer 10 cannot easily be ascertained even by a person skilled in the art. Thus, for example, the absorption layer 10 can be expressed as a layer formed by oxidizing Sn, or a layer formed by causing oxygen deficiency in SnO₂.

In the SnO_{z} layer which is the absorption layer 10, as the degree of oxygen deficiency increases, the degree of absorption of blue light increases. The degree of oxygen deficiency, i.e., the magnitude of (2 - z), can be controlled to a specified level of accuracy by setting the film formation conditions. When a layer containing SnO₂ is formed for antistatic purposes, for the purpose of suppressing the impact on optical performance caused by application of the SnO₂-containing layer as much as possible, the film formation conditions of the SnO₂-containing layer are set so as to suppress oxygen deficiency in the SnO₂-containing layer as much as possible and thereby suppress light absorption as much as possible.

The absorption layer 10 has blue light cutting performance through absorption. SnO_{z} provides blue light cutting performance to the absorption layer 10. SnO_{z} is a material that allows blue light cutting performance to be imparted, i.e., a blue light cutting material.

The refractive index of the SnO_{z} layer which is the absorption layer 10 ranges from about 1.9 to 2.2 depending on the degree of oxygen deficiency.

In the absorption layer 10, it is preferable that SnO_{z} is the main component. For example, in the absorption layer 10, the mass% of SnO_{z} with respect to the total mass of the absorption layer 10 is preferably 50 mass% or more, and more preferably 80 mass% or more.

The absorption layer 10 is disposed preferably on a layer other than the outermost layer and the next outermost layer in the multilayer film 4. The outermost layer is a layer which is farthest from the base material 2, excluding the antifouling layer 12. The next outermost layer is a layer adjacent to the outermost layer on the base material 2 side. In other words, the absorption layer 10 is preferably not disposed on the outermost layer in the multilayer film 4. In addition, the absorption layer 10 is preferably not disposed on the next outermost layer in the multilayer film 4.

The absorption layer 10 is preferably adjacent to the high refractive index layer 8 on the base material 2 side in the multilayer film 4. In other words, a layer adjacent to the absorption layer 10 on the air side is preferably the high refractive index layer 8. In this case, scratch resistance of the multilayer film 4 is improved, making it more difficult for scratches to form on the multilayer film 4. Furthermore, from the viewpoint of further improving the scratch resistance of the multilayer film 4, the physical film thickness of the high refractive index layer 8 adjacent to the absorption layer 10 on the air side is preferably 25 nm or more, more preferably 30 nm or more, and even more preferably 35 nm or more.

In FIG. 1, the absorption layer 10 is disposed on a layer adjacent to the high refractive index layer 8 which is the next outermost layer, on the base material 2 side.

A preferable physical film thickness of the absorption layer 10 is determined by a balance between ensuring a certain level of blue light cutting performance and suppressing a decrease in antireflection performance.

In addition, as the physical film thickness of the absorption layer 10 increases, the absorbed amount of blue light increases, and the blue light cutting degree increases. In addition, as the physical film thickness of the absorption layer 10 increases, it becomes more difficult to design a structure that achieves an antireflection function in combination with the low refractive index layers 6 and the high refractive index layers 8.

Thus, a preferable range of the lower limit of the physical film thickness of the absorption layer 10 is, for example, 20 nm, 25 nm, 30 nm, or 35 nm. Furthermore, a preferable range of the upper limit of the physical film thickness of the absorption layer 10 is, for example, 60 nm, 55 nm, 50 nm, or 45 nm.

From the viewpoint of sufficiently obtaining antireflection performance, the luminous reflectance of the spectacle lens 1 having the multilayer film 4 is preferably 2% or less, more preferably 1.5% or less, and even more preferably 1% or less. The luminous reflectance is specified in JIS T 7334:2011. JIS T 7334:2011 is based on ISO 8980-4:2006.

In the spectacle lens 1 having the multilayer film 4, from the viewpoint of sufficiently obtaining antireflection performance, the average reflectance in the wavelength range of 400 nm or more and 500 nm or less, i.e., the average reflectance in the blue region, is preferably 2% or less, more preferably 1.5% or less, and even more preferably 1% or less.

From the viewpoint of sufficiently obtaining visibility performance while achieving blue light cutting performance, the luminous transmittance of the spectacle lens 1 having the multilayer film 4 is preferably 85% or more, more preferably 90% or more, and even more preferably 95% or more. The luminous transmittance is specified in JIS T 7333:2018. JIS T 7333:2018 is based on ISO 8980-3:2013.

From the viewpoint of sufficiently reducing the burden on the eyes, the blue-colored light cutting rate, i.e., the blue light cutting rate, of the spectacle lens 1 having the multilayer film 4, is preferably 10% or more, more preferably 14% or more, and even more preferably 20% or more. In particular, when the base material 2 having ultraviolet absorbing properties is provided, the blue light cutting rate of the spectacle lens 1 having the multilayer film 4 is preferably 14% or more. In addition, when the base material 2 having absorbing properties for light having a wavelength of 420 nm or less is provided, the blue light cutting rate of the spectacle lens 1 having the multilayer film 4 is preferably 20% or more.

The blue light cutting rate is calculated by using the calculation formula described in JIS T 7333:2011 Appendix C, based on the guideline for a blue light cutting rate defined by the Japan Medical-Optical Equipment Industrial Association.

That is, the blue light cutting rate is a value obtained by subtracting, from 1, a spectral transmittance τ_{sb} weighted by an irradiance distribution of sunlight and a blue light hazard function B (λ), which represents the radiation spectrum risk thereof. Here, the spectral transmittance τ_{sb} is calculated by using the following formula 1, as to the wavelength range of 380 to 500 nm, at 5 nm steps. The formula for τ_{sb} is similarly described as Solar blue-light transmittance in ISO 8980-3:2022 Annex E.$\begin{matrix}{τ}_{sb} = \frac{{\int }_{380 nm}^{500 nm} τ \left(λ\right) ⋅ {E}_{Sλ} \left(λ\right) ⋅ B \left(λ\right) ⋅ dλ}{{\int }_{380 nm}^{500 nm} {E}_{Sλ} \left(λ\right) ⋅ B \left(λ\right) ⋅ dλ} \\ = \frac{{\int }_{380 nm}^{500 nm} τ \left(λ\right) ⋅ {WB}_{λ} \left(λ\right) ⋅ dλ}{{\int }_{380 nm}^{500 nm} {WB}_{λ} \left(λ\right) ⋅ dλ}\end{matrix}$
- *τ* (2) :: transmittance
- *E_{3λ}* (*λ*)*:*: spectral irradiance of sunlight
- B(2) :: blue light hazard function

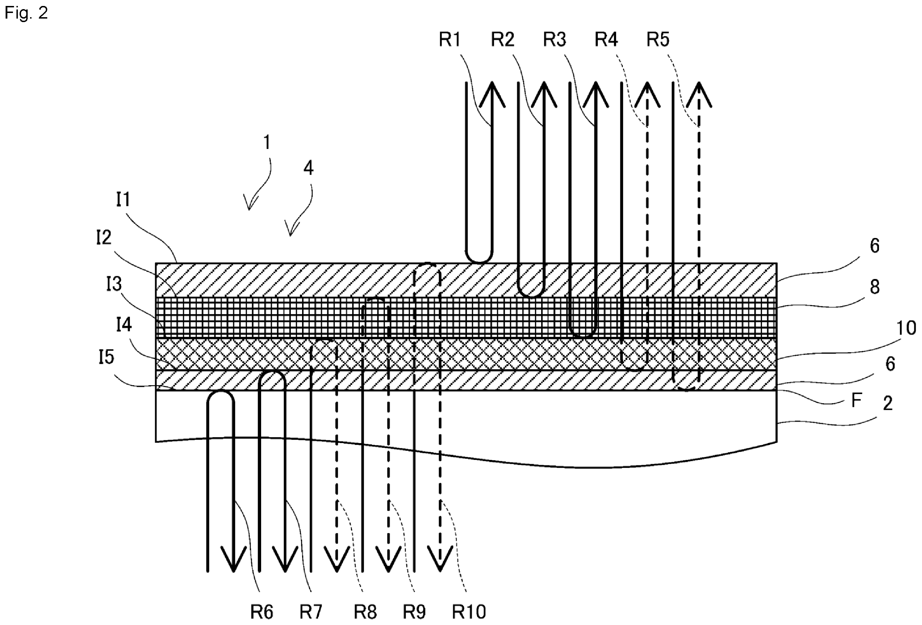

As indicated by dashed lines in FIG. 2, by the absorption layer 10 cutting blue light, reflected light at the multilayer film 4 differs when viewed from the air side and from the eyeball side. Even if the multilayer film 4 has an antireflection function, a small amount of reflected light is observed as seen in typical spectacle lenses.

In the multilayer film 4 disposed on the air-side surface of the base material 2 in FIG. 2, the low refractive index layer 6, the high refractive index layer 8, the absorption layer 10, and the low refractive index layer 6 are disposed in order from the outermost layer toward the base material 2 side.

In the multilayer film 4 in FIG. 2, when viewed from the air side, reflected light R1 at an interface I1 of the outermost layer on the air side, reflected light R2 at an interface I2 between the outermost layer and the next outermost layer, and reflected light R3 at an interface I3 of the next outermost layer on the base material 2 side occur relatively strongly without being absorbed by the absorption layer 10. Meanwhile, due to absorption in the absorption layer 10, reflected light R4 at an interface I4 of the absorption layer 10 on the base material 2 side and reflected light R5 at an interface I5 of the low refractive index layer 6 on the base material 2 side occur relatively weakly.

On the other hand, when viewed from the eyeball side, reflected light R6 at the interface I5 and reflected light R7 at the interface I4 occur relatively strongly. Meanwhile, reflected light R8 at the interface I3, reflected light R9 at the interface I2, and reflected light R10 at the interface I1 occur relatively weakly.

Thus, when the absorption layer 10 is present, the color of the reflected light viewed from the air side of the multilayer film 4 differs from the color of the reflected light viewed from the eyeball side.

Such color differences can be suppressed through the design of the multilayer film 4.

For example, if the absorption layer 10 is disposed on the base material 2 side relative to the high refractive index layer 8 closest to the air side, the color difference can be suppressed.

In addition, in the multilayer film 4, by configuring the low refractive index layer 6 and the high refractive index layer 8 on the air side relative to the absorption layer 10 to be disposed in substantially the same manner as the low refractive index layer 6 and the high refractive index layer 8 on the base material 2 side relative to the absorption layer 10, color differences can be suppressed.

Furthermore, in the multilayer film 4, by causing the total physical film thickness of the low refractive index layers 6 on the air side relative to the absorption layer 10 to be substantially the same as the total physical film thickness of the low refractive index layers 6 on the base material 2 side relative to the absorption layer 10, and by causing the total physical film thickness of the high refractive index layers 8 on the air side relative to the absorption layer 10 to be substantially the same as the total physical film thickness of the high refractive index layers 8 on the base material 2 side relative to the absorption layer 10, color differences can be suppressed.

In the multilayer film 4, from the viewpoint of sufficiently suppressing color differences, with respect to x in an x, y chromaticity diagram in the CIE 1931 XYZ color system, the absolute value of the difference between x of the color of reflected light viewed from the air side and x of the color of reflected light viewed from the eyeball side is preferably within 0.04. Further, in the multilayer film 4, with respect to y in the above x, y chromaticity diagram, the absolute value of the difference between y of the color of reflected light viewed from the air side and y of the color of reflected light viewed from the eyeball side is preferably within 0.06.

Furthermore, in the multilayer film 4, from the viewpoint of obtaining green reflected light which is preferred for the spectacle lens 1 for both cases when viewed from the air side and when viewed from the eyeball side, the color of the reflected light is preferably within the range of 0.10 ≤ x ≤ 0.25 and 0.35 ≤ y ≤ 0.60, or within the range of 0.25 ≤ x ≤ 0.35 and 0.40 ≤ y ≤ 0.60 on both sides.

The antifouling layer 12 is disposed above the absorption layer 10, that is, on the air side of the absorption layer 10. The antifouling layer 12 allows an antifouling function to be imparted to the spectacle lens 1. The antifouling function includes at least one of a water-repellent function and an oil-repellent function.

The antifouling layer 12 is formed by a manufacturing method such as a known deposition method or ion sputtering method.

The antifouling layer 12 is obtained through, for example, polycondensation of an organosilicon compound. Through polycondensation, it becomes possible to thicken and densify the coating, which enhances adhesion to an adjacent layer in the multilayer film 4 and a surface hardness thereof.

The organosilicon compound before polycondensation is preferably a compound having a silicon-containing functional group represented by -SiR_{y}X_{3-y}. Here, R represents a monovalent organic group, X represents a hydrolyzable group, and y represents an integer from 0 to 2. Examples of the X include alkoxy groups such as -OCH₃ and -OCH₂CH₃, acyloxy groups such as -OCOCH₃, ketoxime groups such as -ON=CRₐR_{b}, halogen groups such as -Cl and -Br, and amino groups such as -NR_{c}R_{d}. Rₐ, R_{b}, R_{c}, and R_{d} each represent a monovalent organic group.

As such an organosilicon compound, a fluorine-containing organosilicon compound is suitably used. A fluorine-containing organosilicon compound is comprehensively excellent in water and oil-repellency, electric insulation, demoldability, solvent resistance, lubricity, heat resistance, and defoaming property. In particular, an organosilicon compound having a perfluoroalkyl group or a perfluoropolyether group in a molecule and having a relatively large molecular weight of about 1000 to 50000 has excellent antifouling property. Thus, the antifouling layer 12 obtained through polycondensation of a fluorine-containing organosilicon compound has water and oil-repellency. Therefore, a coating having excellent dirt wiping property can be easily obtained by using a fluorine-containing organosilicon compound in the formation of the antifouling layer 12.

As described above, by the multilayer film 4, an optical function and optical characteristics can be imparted to the spectacle lens 1. The optical function is at least one of an antireflection function and a blue light cutting function. The optical characteristics are at least one of antireflection characteristics and blue light cutting characteristics.

In addition, by the antifouling layer 12 of the multilayer film 4, an antifouling function and antifouling characteristics can be imparted to the spectacle lens 1.

Consequently, spectacles produced by using the spectacle lens 1 have the functions that the spectacle lens 1 has.

### [Examples]

Examples which belong to the present invention will be described below.

The scope of the present invention is not limited to the following examples.

First, regarding the multilayer film 4, the spectral reflectance distributions in the visible region were calculated by computer simulation for film structures 1 to 3 and film structures A to C. The visible region was set to 380 nm or more and 780 nm or less. The visible region may be outside the above range. For example, the lower limit of the visible region may be 390 nm, 400 nm, 410 nm, or 420 nm. The upper limit of the visible region may be 800 nm, 760 nm, 740 nm, or 700 nm.

The material and the physical film thickness of each layer in the film structures 1 to 3 and the film structures A to C are indicated in Table 1 below.

**[Table 1]**

| Layer | | Film structure 1 | | Film structure A | |
|---|---|---|---|---|---|
| Disposition | No . | Material | Film thickness (nm) | Material | Film thickness (nm) |
| Base material side | 1 | SiO₂ | 80.0 | SiO₂ | 90.0 |
| | 2 | ZrO₂ | 15.0 | ZrO₂ | 13.0 |
| | 3 | SiO₂ | 25.0 | SiO₂ | 10.0 |
| | 4 | SnO_{z} | 40.0 | ZrO₂ | 60.0 |
| | 5 | ZrO₂ | 60.0 | SnO_{z} | 40.0 |
| | 6 | SiO₂ | 75.0 | SiO₂ | 75.0 |
| Air side | 7 | Antifouling layer | 5.0 | Antifouling layer | 5.0 |

| Layer | | Film structure 2 | | Film structure B | |
|---|---|---|---|---|---|
| Disposition | No | Material | Film thickness (nm) | Material | Film thickness (nm) |
| Base material side | 1 | SiO₂ | 50.0 | SiO₂ | 55.0 |
| | 2 | ZrO₂ | 40.0 | ZrO₂ | 40.0 |
| | 3 | SiO₂ | 21.0 | SiO₂ | 19.0 |
| | 4 | SnO_{z} | 40.0 | ZrO₂ | 10.0 |
| | 5 | ZrO₂ | 10.0 | SnO_{z} | 40.0 |
| | 6 | SiO₂ | 91.0 | SiO₂ | 90.0 |
| Air side | 7 | Antifouling layer | 5.0 | Antifouling layer | 5.0 |

| Layer | | Film structure 3 | | Film structure C | |
|---|---|---|---|---|---|
| Disposition | No . | Material | Film thickness (nm) | Material | Film thickness (nm) |
| Base material side | 1 | SiO₂ | 80.0 | SiO₂ | 85.0 |
| | 2 | ZrO₂ | 32.0 | ZrO₂ | 35.0 |
| | 3 | SiO₂ | 17.0 | SiO₂ | 9.0 |
| | 4 | SnO_{z} | 40.0 | ZrO₂ | 30.0 |
| | 5 | ZrO₂ | 30.0 | SnO_{z} | 40.0 |
| | 6 | SiO₂ | 82.0 | SiO₂ | 79.0 |
| Air side | 7 | Antifouling layer | 5.0 | Antifouling layer | 5.0 |

The base material 2 on which each of the film structures 1 to 3 was formed was set to be the same as the base material 2 on which each of the film structures A to C was formed. The refractive index of the base material 2 was 1.60. The material of the base material 2 was set to be equivalent to thiourethane resin. The thickness of the base material 2 was set to 1.8 mm. The base material 2 was set to be a spectacle-lens base material, being a convex lens with a power of S-0.00. The extinction coefficient of the base material 2 was set in accordance with ultraviolet absorption properties exhibited by an ultraviolet absorber for general spectacle-lens base materials.

The interposed film 3 interposed between the base material 2 and each of the film structures 1 to 3 was set to be the same as the interposed film 3 interposed between the base material 2 and each of the film structures A to C. The interposed film 3 was set to be a hard coating film. The refractive index of the interposed film 3 was set to 1.60. The material of the interposed film 3 was set to be equivalent to thermosetting silicone resin. The physical film thickness of the interposed film 3 was set to 2.0 µm.

The antifouling layer 12 was set to be the same among the film structures 1 to 3 and the film structures A to C. The antifouling layer 12 was set to be equivalent to a general water-repellent film. The refractive index of the antifouling layer 12 at a wavelength of 500 nm was set to 1.35.

Each of the film structures 1 to 3 and the film structures A to C was set to be formed only on the convex surface of the base material 2, that is, on the air-side surface of the base material 2. No film was set to be formed on the concave surface, that is, on the eyeball-side surface of the base material 2.

In each of the film structures 1 to 3 and film structures A to C, the low refractive index layer 6 was set to be equivalent to a SiO₂ layer made of SiO₂. The refractive index of the SiO₂ layer at a wavelength of 500 nm was set to 1.47. The extinction coefficient of the SiO₂ layer was obtained from analysis of the actual measurement result on the SiO₂ layer.

In each of the film structures 1 to 3 and film structures A to C, the high refractive index layer 8 was set to be equivalent to a ZrO₂ layer made of ZrO₂. The refractive index of the ZrO₂ layer at a wavelength of 500 nm was set to 2.11. The extinction coefficient of the ZrO₂ layer was obtained from analysis of the actual measurement result on the ZrO₂ layer.

In each of the film structures 1 to 3 and film structures A to C, the refractive index of the SnO_{z} layer serving as the absorption layer 10, at a wavelength of 500 nm, was set to 2.18. The extinction coefficients of the SnO_{z} layer were set to 0.0937 at a wavelength of 450 nm, 0.0608 at a wavelength of 500 nm, 0.0369 at a wavelength of 550 nm, and 0.0205 at a wavelength of 600 nm.

In each of the film structures 1 to 3 and film structures A to C, the physical film thickness of the absorption layer 10 was set to 40 nm. When the absorption layer 10 is actually formed, the above physical film thickness of the absorption layer 10 makes it possible to obtain blue light cutting performance that sufficiently reduces the burden on the eyes.

In each of the film structures 1 to 3 and film structures A to C, the number of layers of the multilayer film 4 was set to seven. With the layer closest to the base material 2 being the first layer in the multilayer film 4, the seventh layer, which was a layer closest to the air side, was set to be the antifouling layer 12. The structure of the multilayer film 4 was structured as an alternating film in which, excluding the antifouling layer 12 and the absorption layer 10, the SiO₂ layers and the ZrO₂ layers were alternating with the SiO₂ layer being the first layer.

In each of the film structures 1 to 3, the absorption layer 10 was set to be disposed as the fourth layer. A layer adjacent to the absorption layer 10 on the air side was set to be the ZrO₂ layer. In each of the film structures 1 to 3, the absorption layer 10 was set not to be disposed on the outermost layer, which was a layer closest to the air side excluding the antifouling layer 12. The absorption layer 10 was set not to be disposed on the next outermost layer adjacent to the outermost layer on the base material 2 side.

In each of the film structures A to C, the absorption layer 10 was set to be disposed as the fifth layer. The layer adjacent to the absorption layer 10 on the air side was set to be the SiO₂ layer. In each of the film structures A to C, the absorption layer 10 was set to be disposed on the next outermost layer.

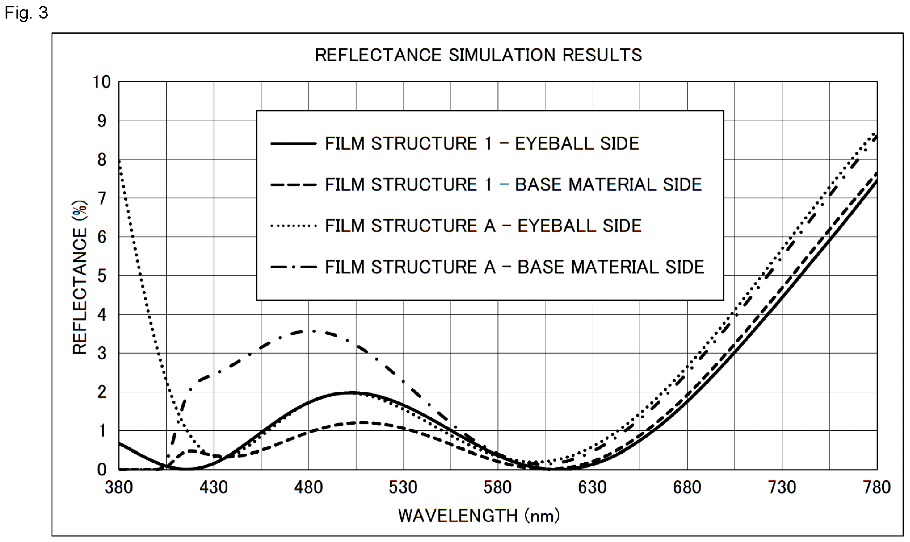

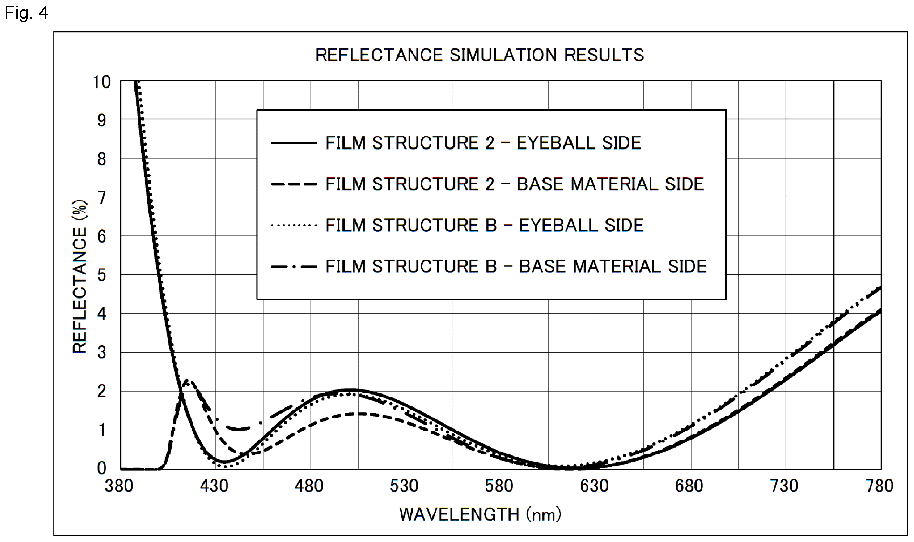

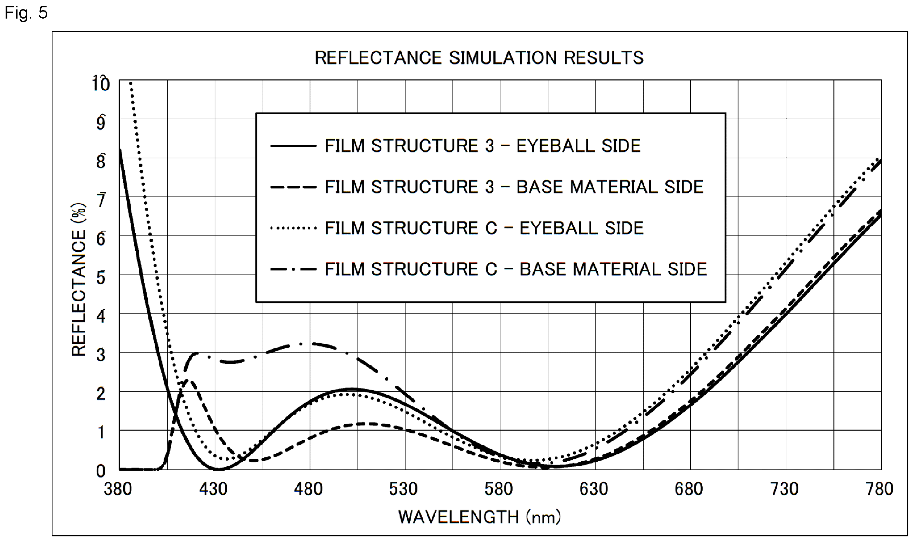

The simulation results for such film structures 1 to 3 and film structures A to C are shown in FIG. 3, FIG. 4, and FIG. 5, as well as in Table 2 below.

The luminous reflectance is calculated by using a D65 light source with a viewing angle of 2°.

**[Table 2]**

| | Reflected light direction | 400 to 500 nm average reflectance (%) | Luminous reflectance (%) | x | y |
|---|---|---|---|---|---|
| Film structure 1 | Air side | 0.87 | 0.98 | 0.19 | 0.40 |
| | Eyeball side | 0.59 | 0.63 | 0.22 | 0.39 |
| Film structure A | Air side | 1.23 | 0.98 | 0.23 | 0.37 |
| | Eyeball side | 2.68 | 1.44 | 0.18 | 0.25 |
| Film structure 2 | Air side | 1.40 | 1.00 | 0.19 | 0.39 |
| | Eyeball side | 1.02 | 0.71 | 0.19 | 0.36 |
| Film structure B | Air side | 1.34 | 0.92 | 0.20 | 0.39 |
| | Eyeball side | 1.47 | 0.87 | 0.18 | 0.30 |
| Film structure 3 | Air side | 1.08 | 1.00 | 0.20 | 0.42 |
| | Eyeball side | 0.85 | 0.60 | 0.22 | 0.36 |
| Film structure C | Air side | 1.38 | 0.96 | 0.23 | 0.36 |
| | Eyeball side | 2.70 | 1.26 | 0.18 | 0.23 |

In each of the film structures A to C, the difference between the color of reflected light viewed from the air side, i.e., the air-side reflected color, and the color of reflected light viewed from the eyeball side, i.e., the eyeball-side reflected color, was relatively greater than those in the film structures 1 to 3. In each of the film structures A and C, the absolute value of the difference between x of the air-side reflected color and x of the eyeball-side reflected color exceeded 0.04. In addition, in each of the film structures A to C, the absolute value of the difference between y of the air-side reflected color and y of the eyeball-side reflected color exceeded 0.06.

Regarding the eyeball-side reflected color of each of the film structures A to C, y was outside the above-described ranges of x and y related to green generally preferred as the color of reflected light of spectacle lenses.

In each of the film structures A to C, the luminous reflectance of the air-side reflected color and the luminous reflectance of the eyeball-side reflected color were both 2% or less.

In each of the film structures A and C, the average reflectance in the blue region of the eyeball-side reflected color exceeded 2%.

In each of the film structures 1 to 3, the difference between the air-side reflected color and the eyeball-side reflected color was more suppressed than those in each of the film structures A to C. In each of the film structures 1 to 3, the absolute value of the difference between x of the air-side reflected color and x of the eyeball-side reflected color was within 0.04. In addition, in each of the film structures 1 to 3, the absolute value of the difference between y of the air-side reflected color and y of the eyeball-side reflected color was within 0.06.

Regarding x and y of each of the film structures 1 to 3, both the air-side reflected color and the eyeball-side reflected color were within the above-described x and y ranges related to green generally preferred as the color of reflected light of spectacle lenses.

In each of the film structures 1 to 3, the luminous reflectance of the air-side reflected color and the luminous reflectance of the eyeball-side reflected color were both 2% or less.

In each of the film structures 1 to 3, the average reflectance in the blue region of the air-side reflected color and the average reflectance in the blue region of the eyeball-side reflected color were both 2% or less.

The multilayer film 4 for each of the film structures 1 to 3 and the above-described base material 2 and interposed film 3 were actually formed, thereby producing each of Examples 1 to 3. In addition, the multilayer film 4 for the film structure A and the above-described base material 2 and interposed film 3 were actually formed, thereby producing Comparative Example 1. The multilayer film 4 for each of the film structures 1 to 3 and A was formed on the air-side surface of the interposed film 3. In each of Examples 1 to 3 and Comparative Example 1, no film was formed on the eyeball-side surface of the base material 2.

The interposed film 3 in each of Examples 1 to 3 and Comparative Example 1 was more specifically formed as follows. That is, 206 g of methanol, 300 g of methanoldispersed titania sol (manufactured by JGC Catalysts and Chemicals Ltd., solid content of 30%), 60 g of γ-glycidoxypropyltrimethoxysilane, 30 g of γ-glycidoxypropylmethyldiethoxysilane, and 60 g of tetraethoxysilane were dropped into a reaction vessel, 0.01 N of hydrochloric acid aqueous solution was dropped into the mixture, and the obtained mixture was stirred and hydrolyzed. Subsequently, 0.5 g of a flow regulating agent and 1.0 g of a catalyst were added, and the obtained mixture was stirred at room temperature for 3 hours, thereby forming the hard coating solution. The hard coating solution was applied to the air-side surface of the base material 2, and heated at 120°C for 1.5 hours and hardened, thereby forming the hard coating film having a film thickness of 2.0 µm.

In each of Examples 1 to 3 and Comparative Example 1, the low refractive index layer 6, i.e., the SiO₂ layer, was deposited using SiO₂ as the deposition material.

In addition, in each of Examples 1 to 3 and Comparative Example 1, the high refractive index layer 8, i.e., the ZrO₂ layer, was deposited using ZrO₂ as the deposition material.

Furthermore, in each of Examples 1 to 3 and Comparative Example 1, the absorption layer 10, i.e., the SnO_{Z} layer, was deposited using SnO₂ as the deposition material.

As Comparative Example 2, a multilayer film 4 having a film structure D related to a general antireflection film equipped with an antifouling film, indicated in Table 3 below, was actually formed by disposing the base material 2, the interposed film 3, and the multilayer film 4, in the same manner as Examples 1 to 3 and Comparative Example 1.

In addition, as Comparative Example 3, a multilayer film 4 having a film structure E related to a general reflective blue light cutting film, indicated in Table 3 below, was actually formed by disposing the base material 2, the interposed film 3, and the multilayer film 4, in the same manner as Examples 1 to 3 and Comparative Example 1.

Furthermore, as Comparative Example 4, a multilayer film 4 having a film structure F related to a general reflective blue light cutting film, indicated in Table 3 below, was actually formed by disposing the base material 2, the interposed film 3, and the multilayer film 4, in the same manner as Examples 1 to 3 and Comparative Example 1.

**[Table 3]**

| Layer | | Film structure D | | Film structure E | | Film structure F | |
|---|---|---|---|---|---|---|---|
| Disposition | N o. | Material | Film thickness (nm) | Material | Film thickness (nm) | Material | Film thickness (nm) |
| Base material side | 1 | SiO₂ | 32.0 | ZrO₂ | 10.0 | ZrO₂ | 10.0 |
| | 2 | ZrO₂ | 43.0 | SiO₂ | 30.0 | SiO₂ | 25.0 |
| | 3 | SiO₂ | 13.0 | ZrO₂ | 10.0 | ZrO₂ | 34.0 |
| | 4 | ZrO₂ | 60.0 | SiO₂ | 210.0 | SiO₂ | 29.0 |
| | 5 | SiO₂ | 90.0 | ZrO₂ | 106.0 | ZrO₂ | 18.0 |
| | 6 | Antifoulin g layer | 5.0 | SiO₂ | 83.0 | SiO₂ | 95.0 |
| Air side | 7 | --- | --- | Antifoulin g layer | 5.0 | Antifoulin g layer | 5.0 |

Next, the average reflectance in the blue region, the luminous reflectance using a D65 light source with a viewing angle of 2°, and x and y for the reflected light viewed from the air side and the reflected light viewed from the eyeball side, according to each of Examples 1 to 3 and Comparative Examples 1 to 4, were actually measured. The actual center thickness of the base material 2 according to each of Examples 1 to 3 and Comparative Examples 1 to 4 was actually measured as well.

The measurement results are indicated in Table 4 below.

**[Table 4]**

| | Air side | Base material center thickness (mm) | Reflected light direction | 400 to 500 nm average reflectance (%) | Luminous reflectance (%) | x | y |
|---|---|---|---|---|---|---|---|
| | Eyeball side | | | | | | |
| Example 1 | Film structure 1 | 1.883 | Air side | 0.77 | 0.97 | 0.20 | 0.42 |
| | --- | | Eyeball side | 0.59 | 0.63 | 0.22 | 0.39 |
| Comparative Example 1 | Film structure A | 1.873 | Air side | 1.29 | 1.17 | 0.24 | 0.38 |
| | --- | | Eyeball side | 2.71 | 1.56 | 0.18 | 0.26 |
| Example 2 | Film structure 2 | 1.879 | Air side | 1.48 | 0.97 | 0.19 | 0.37 |
| | --- | | Eyeball side | 0.80 | 0.59 | 0.20 | 0.38 |
| Example 3 | Film structure 3 | 1.881 | Air side | 1.06 | 1.00 | 0.21 | 0.42 |
| | --- | | Eyeball side | 0.65 | 0.55 | 0.25 | 0.40 |
| Comparative Example 2 | Film structure D | 1.868 | Air side | 0.85 | 0.74 | 0.19 | 0.40 |
| | --- | | Eyeball side | 0.65 | 0.71 | 0.19 | 0.41 |
| Comparative Example 3 | Film structure E | 1.878 | Air side | 5.27 | 1.10 | 0.14 | 0.12 |
| | --- | | Eyeball side | 4.88 | 1.06 | 0.14 | 0.12 |
| Comparative Example 4 | Film structure F | 1.878 | Air side | 4.31 | 1.85 | 0.18 | 0.23 |
| | --- | | Eyeball side | 3.66 | 1.77 | 0.18 | 0.23 |

The spectral reflectance distributions for the reflected light viewed from the air side and the reflected light viewed from the eyeball side, according to each of Examples 1 to 3 and Comparative Examples 1 to 4, were actually measured.

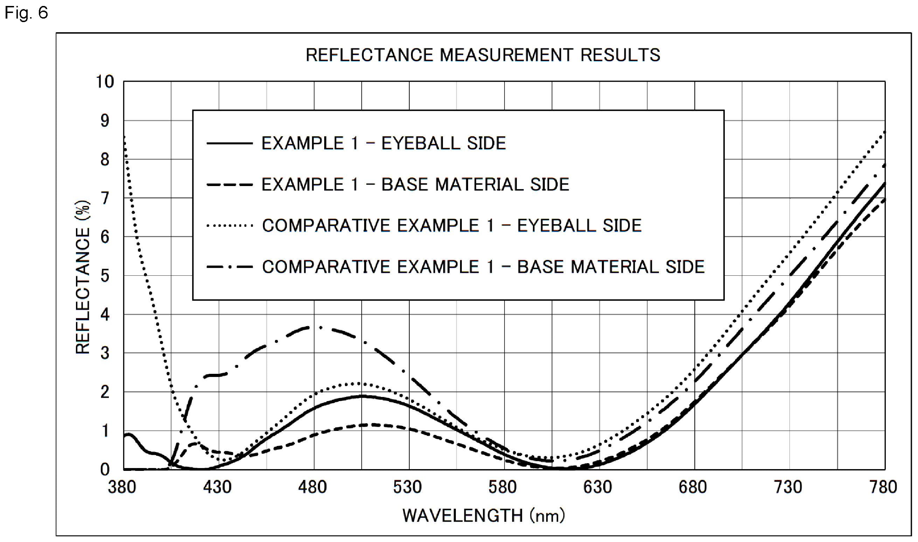

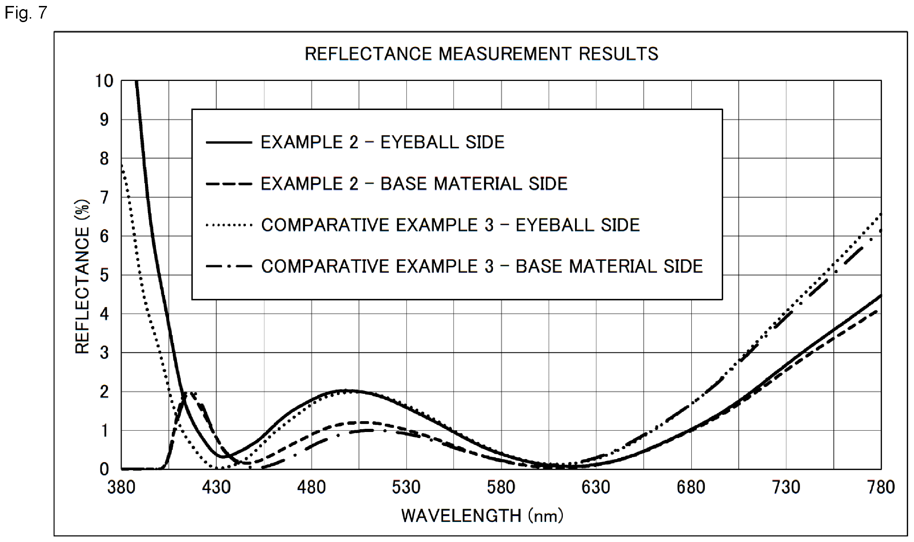

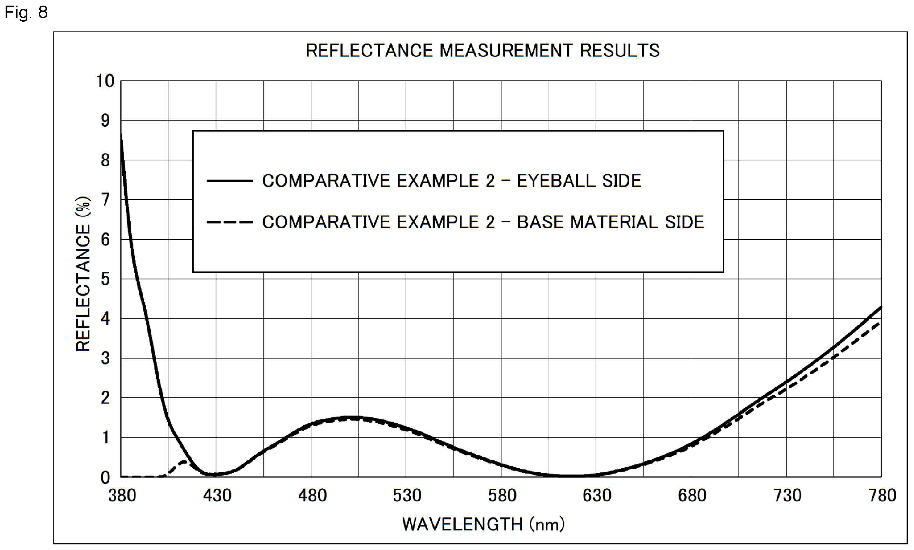

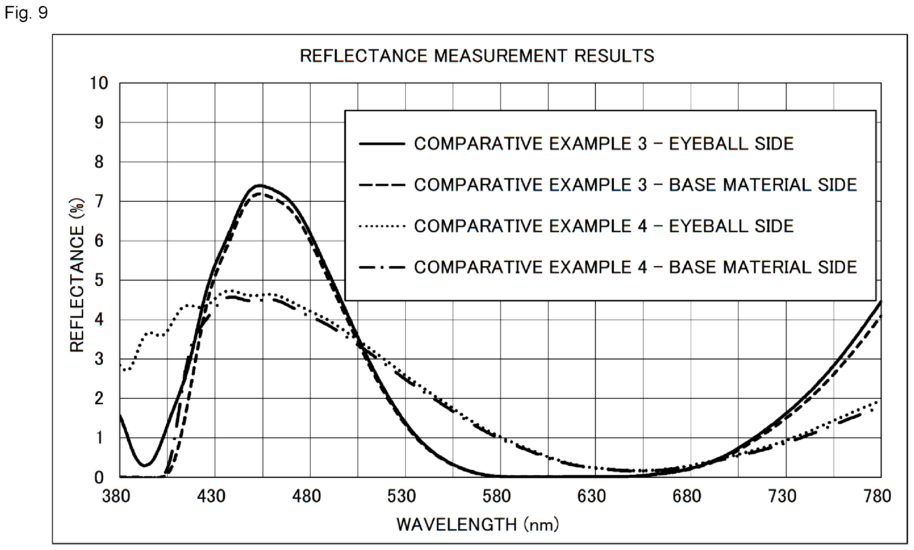

The measurement results are indicated in FIG. 6, FIG. 7, FIG. 8, and FIG. 9.

Examples 1 to 3 and Comparative Example 1 had performance similar to the simulations for the corresponding film structures 1 to 3 and film structure A regarding the air-side reflected color and the eyeball-side reflected color.

In Comparative Example 2 which had the film structure D related to a general antireflection film, there was no layer for absorbing visible light, and thus, the air-side reflected color and the eyeball-side reflected color were significantly close to each other. However, Comparative Example 2 did not have blue light cutting performance.

In Comparative Examples 3 and 4 which respectively had the film structures E and F related to a blue light reflective film, the average reflectance in the blue region was high, and the air-side reflected color and the eyeball-side reflected color were blue instead of green.

A scratch resistance test was performed on each of Examples 1 to 3 and Comparative Examples 1 and 2. The scratch resistance test included both standard and accelerated tests.

In the standard test, steel wool #000 was pressed against the test-target multilayer film 4 side surface with a load of 2 kg, and reciprocated 100 times at a speed of 2.5 seconds per round trip. Then, the number of scratches visible in the central part of the reciprocated area on the test target illuminated by a white LED light source located 3 m away was counted. Depending on the number of scratches, a determination of "excellent" was given for 0 to 1 scratch, "good" for 2 to 3 scratches, and "fair" for 4 or more scratches.

In the accelerated test, the test target was put into a sunshine weather meter (S80B, manufactured by Suga Test Instruments Co., Ltd.) first under conditions of 60°C temperature and 50% RH humidity for 60 hours. Thereafter, similar to the standard test, steel wool #000 was applied to the test target, the number of scratches was counted, and an evaluation was given.

The scratch resistance test results are indicated in Table 5 below.

**[Table 5]**

| | Disposition of SnO_{z} layer relative to ZrO₂ layer | Film thickness (nm) of ZrO₂ layer adjacent to SnO_{z} layer | Scratch resistance test results | | | |
|---|---|---|---|---|---|---|
| | | | Standard test | | Accelerated test | |
| | | | Scratch (count) | Determination | Scratch (count) | Determination |
| Example 1 | Base material side | 60 | 1 | excellent | 2 | good |
| Comparative Example 1 | Air side | 60 | 4 | fair | 5 | fair |
| Example 2 | Base material side | 10 | 6 | fair | 7 | fair |
| Example 3 | Base material side | 30 | 2 | good | 3 | good |
| Comparative Example 2 | --- | 60 | 1 | excellent | 2 | good |

In each of Examples 1 to 3, the SnO_{Z} layer was disposed on the base material 2 side of the ZrO₂ layer. In each of Examples 1 and 3, the number of scratches was fewer, and thus the scratch resistance was more excellent than those in a case where the SnO_{Z} layer was disposed on the air side of the ZrO₂ layer. The scratch resistance in Example 2 was similar to that in Comparative Example 1.

However, the scratch resistance is also affected by the physical film thickness of the layer adjacent to the SnO_{Z} layer on the air side. The physical film thickness of the layer adjacent to the SnO_{Z} layer on the air side in Example 2 was 10 nm, which was thinner than those in Examples 1 and 3, and thus the scratch resistance in Example 2 was relatively low. In addition, the scratch resistance in Example 3, in which the physical film thickness of the layer adjacent to the SnO_{Z} layer on the air side was 30 nm, was sufficient, and the scratch resistance in Example 1, in which the physical film thickness was 60 nm, was even more sufficient. Therefore, from the viewpoint of scratch resistance, the SnO_{Z} layer is preferably disposed on the base material 2 side of the ZrO₂ layer, and the physical film thickness of the ZrO₂ layer is preferably 30 nm or more.

As indicated in Table 6 below, the film structures 1 to 3 and D to F were actually formed on the air-side surface and the eyeball-side surface of the base material 2, thereby forming Examples 4 to 6 and Comparative Examples 5 and 6.

The base material 2 in each of Examples 4 to 6 and Comparative Examples 5 to 6 was the same as the base material 2 in each of Examples 1 to 3 and Comparative Examples 1 to 4.

Each of Examples 4 to 6 was configured by disposing an absorptive blue light cutting film on the air-side surface of the base material 2 and an antireflection film on the eyeball-side surface of the base material 2.

Comparative Example 5 was configured by disposing antireflection films on both the air-side surface and the eyeball-side surface of the base material 2.

Comparative Example 6 was configured by disposing reflective blue light cutting films on both the air-side surface and the eyeball-side surface of the base material 2.

**[Table 6]**

| | Air side | Base material center thickness (mm) | Luminous transmittance (%) | Blue light cutting rate (%) |
|---|---|---|---|---|
| | Eyeball side | | | |
| Example 4 | Film structure 1 | 1.883 | 94.57 | 14.72 |
| | Film structure D | | | |
| Example 5 | Film structure 2 | 1.879 | 94.69 | 16.98 |
| | Film structure D | | | |
| Example 6 | Film structure 3 | 1.881 | 94.93 | 15.07 |
| | Film structure D | | | |
| Comparative Example 5 | Film structure D | 1.868 | 97.91 | 5.71 |
| | Film structure D | | | |
| Comparative Example 6 | Film structure E | 1.878 | 96.60 | 14.18 |
| | Film structure F | | | |

Then, as indicated in Table 6, the base material center thickness, the luminous transmittance, and the blue light cutting rate were actually measured for each of Examples 4 to 6 and Comparative Examples 5 to 6.

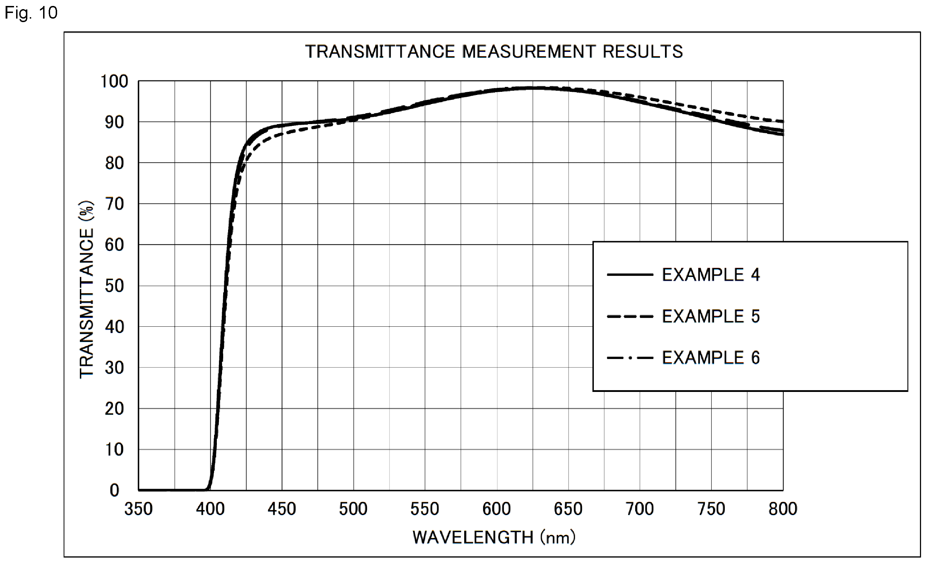

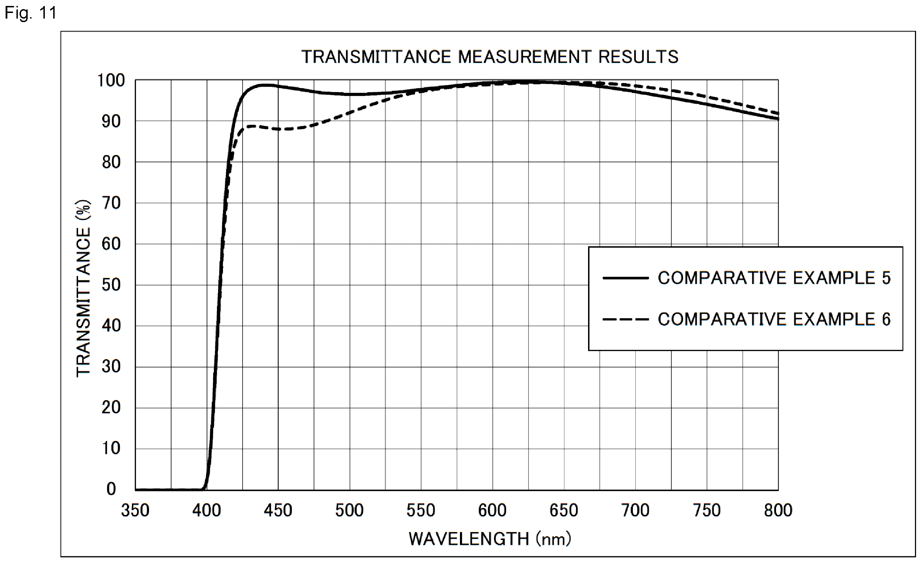

As shown in FIG. 10 and FIG. 11, the spectral transmittance distributions in the visible region and a region adjacent thereto, according to each of Examples 4 to 6 and Comparative Examples 5 to 6, were actually measured.

In Comparative Example 5, although the luminous transmittance was excellent, the blue light cutting rate was low.

In Comparative Example 6, the blue light cutting rate was 14% or more, which was sufficient, and the luminous transmittance was 90% or more, which was sufficient. However, in Comparative Example 6, the reflected light was relatively stronger than those in the other examples and comparative examples, and the reflected color was blue.

In each of Examples 4 to 6, the blue light cutting rate was 14% or more, which was sufficient, and the luminous transmittance was 90% or more, which was sufficient. In addition, in each of Examples 4 to 6, the reflected light was relatively weak, and the reflected color was green. Furthermore, in each of Examples 4 to 6, the air-side reflected color and the eyeball-side reflected color were similar.

In addition, as indicated in Table 7 below, the film structures 1 and D to F were actually formed on the air-side surface and the eyeball-side surface of the base material 2, thereby forming Example 7 and Comparative Example 7.

The base material 2 in each of Example 7 and Comparative Example 7 was different from the base material 2 in each of Examples 1 to 6 and Comparative Examples 1 to 6. The base material 2 in each of Example 7 and Comparative Example 7 contained a blue light absorber serving as a material for absorbing a part of blue light (light on the short wavelength side of the blue region). Except for the configuration in which the blue light absorber was contained, the base material 2 in each of Example 7 and Comparative Example 7 had the same configuration as the base material 2 in each of Examples 1 to 6 and Comparative Examples 1 to 6.

Example 7 was configured by disposing an absorptive blue light cutting film on the air-side surface of a blue-light absorptive base material 2 and an antireflection film on the eyeball-side surface of the base material 2.

Comparative Example 7 was configured by disposing reflective blue light cutting films on both the air-side surface and the eyeball-side surface of the base material 2.

**[Table 7]**

| | Air side | Base material center thickness (mm) | Luminous transmittance (%) | Blue light cutting rate (%) |
|---|---|---|---|---|
| | Eyeball side | | | |
| Example 7 | Film structure 1 | 1.882 | 91.98 | 24.40 |
| | Film structure D | | | |
| Comparative Example 7 | Film structure E | 1.882 | 93.95 | 24.50 |
| | Film structure F | | | |

Then, as indicated in Table 7, the base material center thickness, the luminous transmittance, and the blue light cutting rate were actually measured for each of Example 7 and Comparative Example 7.

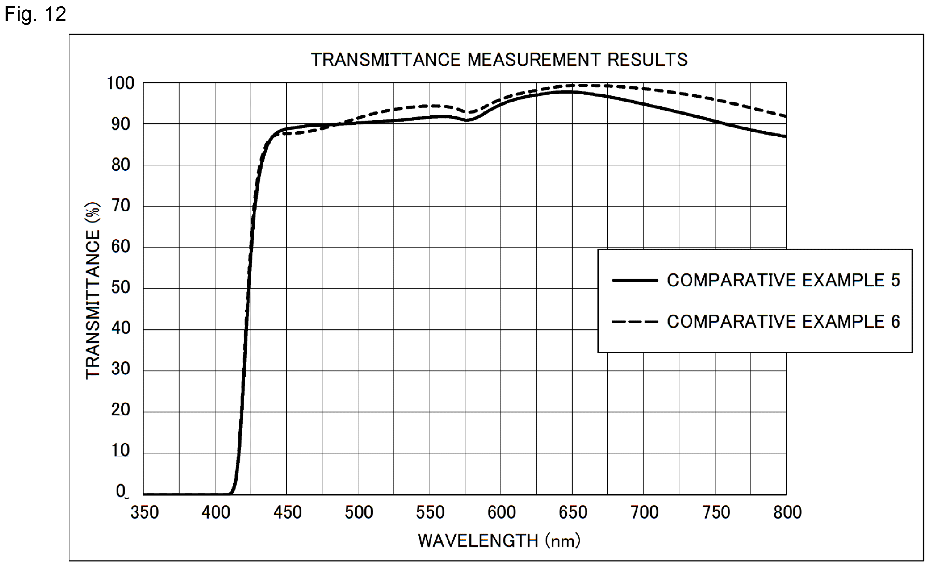

As shown in FIG. 12, the spectral transmittance distributions in the visible region and a region adjacent thereto, according to each of Example 7 and Comparative Example 7, were actually measured.

In Comparative Example 7, the blue light cutting rate was 20% or more, which was sufficient, and the luminous transmittance was 90% or more, which was sufficient. However, in Comparative Example 7, the reflected light was relatively stronger than those in the other examples and comparative examples, and the reflected color was blue.

In Example 7, the blue light cutting rate was 20% or more, which was sufficient, and the luminous transmittance was 90% or more, which was sufficient. In addition, in Example 7, the reflected light was relatively weaker than those in the other examples and comparative examples, and the reflected color was green. Furthermore, in Example 7, the air-side reflected color and the eyeball-side reflected color were similar.

Hereinafter, the structures and effects of Examples 1 to 7 are mainly summarized.

A spectacle lens 1 in Examples 1 to 7 includes the base material 2 and the multilayer film 4 disposed indirectly on the film disposition surface F of the base material 2. The multilayer film 4 includes the one or more low refractive index layers 6, the one or more high refractive index layers 8, and the absorption layer 10. The absorption layer 10 contains SnO_{z} (0 < z ≤ 2). The absorption layer 10 is disposed on the side closer to the base material 2 relative to the high refractive index layer 8 closest to the air side.

Thus, the spectacle lens 1 having sufficient scratch resistance, visibility, and reduction in burden on the eyes is provided.

In addition, the absorption layer 10 in Examples 1 to 7 is adjacent to the high refractive index layer 8 closest to the air side. Thus, the spectacle lens 1 having even better scratch resistance is provided.

In Examples 1, 3 to 4, and 6 to 7, the physical film thickness of the high refractive index layer 8 closest to the air side is 30 nm or more. Thus, the spectacle lens 1 having even better scratch resistance is provided.

Furthermore, the average reflectance in the wavelength range of 400 nm or more and 500 nm or less in Examples 1 to 7 is 2% or less. Thus, the spectacle lens 1 having even better visibility and good appearance is provided.

The luminous reflectance in Examples 1 to 7 is 2% or less. Thus, the spectacle lens 1 having even better visibility and good appearance is provided.

The luminous transmittance in Examples 1 to 7 is 90% or more. Thus, the spectacle lens 1 having even better visibility is provided.

The blue light cutting rate in Examples 1 to 7 is 14% or more. Thus, the spectacle lens 1 that can further reduce the burden on the eyes is provided.

In Example 7, the blue light cutting rate is 20% or more, and the base material 2 contains a blue light absorber. Thus, the spectacle lens 1 that can, by cooperation with the base material 2, further reduce the burden on the eyes is provided.

In Examples 1 to 7, the physical film thickness of the absorption layer 10 is 40 nm, that is, not more than 60 nm. Thus, the spectacle lens 1 that reduces the burden on the eyes while having sufficient visibility is provided.

In addition, the high refractive index layer 8 in Examples 1 to 7 is a ZrO₂ layer. The low refractive index layer 6 in Examples 1 to 7 is a SiO₂ layer. Thus, the multilayer film 4 can be formed more easily.

The multilayer film 4 in Examples 1 to 7 includes an antifouling layer 12 exhibiting at least one of water-repellency and oil-repellency. The antifouling layer 12 is disposed on the side closer to the air side relative to the absorption layer 10. In addition, the antifouling layer 12 is a fluorine-containing organosilicon compound. Thus, the spectacle lens 1 further having antifouling property is provided.

The base material 2 in Examples 1 to 7 is made of plastic. Thus, the spectacle lens 1 which is more easily handled is provided.

The multilayer film 4 in Examples 1 to 7 is formed via a hard coating film serving as an interposed film 3. Thus, the spectacle lens 1 which is more easily handled is provided.

Furthermore, a spectacle lens 1 in Examples 1 to 7 includes a base material 2 and a multilayer film 4 disposed indirectly on a film disposition surface F of the base material 2. The multilayer film 4 includes the one or more low refractive index layers 6, the one or more high refractive index layers 8, and the absorption layer 10. The absorption layer 10 contains SnO_{z} (0 < z ≤ 2). The absorption layer 10 is not disposed on the outermost layer, which is a layer closest to the air side, and not disposed on the next outermost layer, which is a layer adjacent to the outermost layer on the base material 2 side, in the multilayer film 4.

Thus, the spectacle lens 1 having sufficient scratch resistance, visibility, and reduction in burden on the eyes is provided.

Still furthermore, a spectacle lens 1 in Examples 1 to 7 includes a base material 2 and a multilayer film 4 disposed indirectly on a film disposition surface F of the base material 2. The multilayer film 4 includes the one or more low refractive index layers 6, the one or more high refractive index layers 8, and the absorption layer 10. The absorption layer 10 contains SnO_{z} (0 < z ≤ 2). The absorption layer 10 is disposed on the side closer to the base material 2 relative to the low refractive index layer 6 closest to the air side, and is disposed on the side closer to the base material 2 relative to the high refractive index layer 8 closest to the air side.

Thus, the spectacle lens 1 having sufficient scratch resistance, visibility, and reduction in burden on the eyes is provided.

## Claims

1. A spectacle lens comprising:
a base material; and
a multilayer film disposed directly or indirectly on a film disposition surface of the base material, wherein
the multilayer film includes one or more low refractive index layers, one or more high refractive index layers, and an absorption layer, and
the absorption layer
contains SnO_{z} (0 < z ≤ 2), and
is disposed on a side closer to the base material relative to the high refractive index layer closest to an air side.

2. The spectacle lens according to claim 1, wherein the absorption layer is adjacent to the high refractive index layer closest to the air side.

3. The spectacle lens according to claim 1, wherein a physical film thickness of the high refractive index layer closest to the air side is 30 nm or more.

4. The spectacle lens according to claim 1, wherein a physical film thickness of the absorption layer is 60 nm or less.

5. The spectacle lens according to claim 1, wherein an average reflectance in a wavelength range of 400 nm or more and 500 nm or less is 2% or less.

6. The spectacle lens according to claim 1, wherein a luminous reflectance is 2% or less.

7. The spectacle lens according to claim 1, wherein a luminous transmittance is 90% or more.

8. The spectacle lens according to claim 1, wherein a blue light cutting rate is 14% or more.

9. The spectacle lens according to claim 1, wherein
a blue light cutting rate is 20% or more, and
the base material contains a blue light absorber.

10. The spectacle lens according to claim 1, wherein the high refractive index layer is a ZrO₂ layer.

11. The spectacle lens according to claim 1, wherein the low refractive index layer is a SiO₂ layer.

12. The spectacle lens according to claim 1 wherein
the multilayer film includes an antifouling layer exhibiting at least one of water-repellency and oil-repellency, and
the antifouling layer is disposed on a side closer to the air side relative to the absorption layer.

13. The spectacle lens according to claim 12, wherein the antifouling layer is a fluorine-containing organosilicon compound.

14. The spectacle lens according to claim 1, wherein the base material is made of plastic.

15. The spectacle lens according to claim 1, wherein the multilayer film is formed via a hard coating film.

16. A spectacle lens comprising:
a base material; and
a multilayer film disposed directly or indirectly on a film disposition surface of the base material, wherein
the multilayer film includes one or more low refractive index layers, one or more high refractive index layers, and an absorption layer, and
the absorption layer
contains SnO_{z} (0 < z ≤ 2),
is not disposed on an outermost layer, which is a layer closest to an air side in the multilayer film, and
is not disposed on a next outermost layer, which is a layer adjacent to the outermost layer on the base material side.

17. A spectacle lens comprising:
a base material; and
a multilayer film disposed directly or indirectly on a film disposition surface of the base material, wherein
the multilayer film includes one or more low refractive index layers, one or more high refractive index layers, and an absorption layer, and
the absorption layer
contains SnO_{z} (0 < z ≤ 2),
is disposed on a side closer to the base material relative to the low refractive index layer closest to the air side, and
is disposed on a side closer to the base material relative to the high refractive index layer closest to the air side.

18. Spectacles comprising the spectacle lens according to any one of claims 1 to 17.
